(19) Europäisches Patentamt / European Patent Office / Office européen des brevets

(11) EP 3 600 870 B2

(12) NEW EUROPEAN PATENT SPECIFICATION

After opposition procedure

(45) Date of publication and mention
of the opposition decision:
26.02.2025   Bulletin 2025/09

(45) Mention of the grant of the patent:
30.12.2020   Bulletin 2020/53

(21) Application number: 18712922.6

(22) Date of filing: 29.03.2018

(51) International Patent Classification (IPC):
B32B 5/02 (2006.01)        B32B 7/12 (2006.01)
B32B 15/085 (2006.01)      B32B 15/12 (2006.01)
B32B 15/14 (2006.01)       B32B 15/18 (2006.01)
B32B 15/20 (2006.01)       B32B 27/06 (2006.01)
B32B 27/08 (2006.01)       B32B 27/10 (2006.01)
B32B 27/12 (2006.01)       B32B 3/26 (2006.01)

(52) Cooperative Patent Classification (CPC):
B32B 7/12; B32B 3/266; B32B 5/028;
B32B 15/085; B32B 15/12; B32B 15/14;
B32B 15/18; B32B 15/20; B32B 27/06;
B32B 27/08; B32B 27/10; B32B 27/12;
B32B 2250/03; B32B 2250/40; B32B 2260/021;
(Cont.)

(86) International application number:
PCT/EP2018/058048

(87) International publication number:
WO 2018/178223 (04.10.2018 Gazette 2018/40)

(54) **MULTILAYER COMPOSITES WITH REDUCED BOND LINE READ THROUGH**

MEHRSCHICHTIGE VERBUNDWERKSTOFFE MIT REDUZIERTEM
KLEBSCHICHTDURCHSCHLAGEN

COMPOSITES MULTICOUCHES AVEC TRANSLECTURE DE LIGNE DE LIAISON RÉDUITE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 31.03.2017  EP 17164353

(43) Date of publication of application:
05.02.2020   Bulletin 2020/06

(73) Proprietor: Sika Technology AG
6340 Baar (CH)

(72) Inventor: GATTI, Michele
5070 Frick (CH)

(74) Representative: Sika Patent Attorneys
C/o Sika Technology AG
Corp. IP Dept.
Tüffenwies 16
8048 Zürich (CH)

(56) References cited:
EP-B1- 2 563 561        WO-A1-2005/073330
WO-A1-2009/015149       WO-A1-2016/183580

WO-A1-2017/151981    WO-A1-2018/178223
CA-A- 822 071        CA-A- 822 071
CA-A- 962 573        CA-A- 962 573
JP-A- 2002 249 071   JP-A- H11 158 313
US-A- 5 585 178      US-A1- 2003 176 128
US-A1- 2004 262 853  US-A1- 2005 081 383
US-A1- 2007 032 575  US-A1- 2009 056 868
US-A1- 2009 056 868  US-A1- 2009 068 479
US-A1- 2012 298 300  US-A1- 2016 101 599
US-A1- 2016 101 599  US-B1- 6 382 635
US-B1- 6 602 611     US-B1- 6 602 611
US-H- H2 047

• ANONYMOUS: "DIN 54451:1978-11 Prüfung von
Metallklebstoffen und Metallklebungen;
Zugscher-Versuch zur Ermittlung des
Schubspannungs-Gleitungs-Diagramms eines
Klebstoffs in einer Klebung", DEUTSCHE NORM,
1 November 1978 (1978-11-01), pages 1 - 5
• Overview of materials for Epoxy Cure Resin"

- K. SCHNEIDER, LAUKE B., BECKERT W.: "Compression Shear Test (CST) – A Convenient Apparatus for the Estimation of Apparent Shear Strength of Composite Materials", APPLIED COMPOSITE MATERIALS, KLUWER ACADEMIC PUBLISHERS, LONDON, NL, vol. 8, no. 1, 1 January 2001 (2001-01-01), NL, pages 43 - 62, ISSN: 0929-189X, DOI: 10.1023/A:1008919114960
- HUVENERS E.M.P, HERWIJNEN, SOETENS F, HOFMEYER H: "Mechanical shear properties of adhesives", PROCEEDINGS OF THE 10TH INTERNATIONAL CONFERENCE ON ARCHITECTURAL AND AUTOMOTIVE GLASS, 15-18 JUNE 2007, TAMPERE, FINLAND, GLASS PERFORMANCE DAYS, TAMGLASS LTD. OY, 1 January 2007 (2007-01-01), pages 367 - 370
- OIARTZUN MAIALEN A: "Mixed material bonding: effects of the properties of the adhesive on the thermal shape distortion", THESIS UNIVERSITY OF SKÖVDE, 2016, pages 1 - 41
- ANONYMOUS: "Design Guidance - Service Requirements - Adhesive Type", ADHESIVES DESIGN TOOLKIT, 14 September 2021 (2021-09-14), pages 1 - 3, Retrieved from the Internet <URL:http://www.adhesivestoolkit.com/Toolkits/DesignGuidance/AdhesiveType.xtp> [retrieved on 20211007]
- waybackmachine" documentation
- IPRP for the contested patent
- English translation of JP2002249071a
- English translation of JPH11158313a
- Produktdatenblatt Sika Tack OEM+ (2007) mit offenbartem G-Modul.
- Produktdatenblatt Sikaflex -234 (2015)
- Brockmann, Walter et al., "Adhesive Bonding - Materials,Applications and Technology" Wiley-VCH Verlag GmbH & Co.KGaA, 2009
- L-5206 Technical Data Sheet
- L-5208 Technical Data Sheet
- L-5224 Technical Data Sheet
- L-5248 Technical Data Sheet
- Obi, Bernard E.. "Polymeric Foams - Structure - Property -Performance" United Kingdom: Elsevier, 07.12.2017
- Russik, Edward M. et al., "Development and Characterization of a New Epoxy Foam Encapsulant as an Able foam Replacement" Sandia Report SAND98-2538,December 1998
- SICOMIN Epoxy Systems, PB 170, PB 250, PB 400, PB 600,Epoxy Systeme zur Herstellung von Zellschäumen,11.02.2009
- Casey, Kevin et al., "Expandable Epoxy Foam: A Systematic Approach to Improve Vehicle Performance "SAE Technical Paper Series 2004-01-0243, December 2004 ISSN: 0-7680-1319-4
- Hinnerichs , Terry et al., "Validation of a Viscoelastic Model for Foam Encapsulated Component Response Over a Wide Temperature Range SAND2006-6611C"Sandia National Lab SAND2006-6611C , December 2006
- Habenicht, Gerd, "Kleben - Grundlagen, Technologies Anwendungen" Germany: Springer Verlag. 2009, Ed. 6th ISBN 978-3-540-85264-3
- Zalobsky, Anita et al., "Recommendations on Selection and Use of Cavity Reinforcement Materials" SAE Technical Paper Series 1999-01-1672, December 1999 ISSN: 0148-7191
- TEROSON PU 8594 HMLC (Technical Data Sheet) (published October2016)
- TEROSON-8597 HMLC (Technical Data Sheet) (published February2003)
- TEROSON PU 8630 2HMLC (Technical Data Sheet) (published October2016)
- TEROSTAT 9097 PL HMLC (Technical Data Sheet) (published July 2009)

(52) Cooperative Patent Classification (CPC): (Cont.)
B32B 2260/046; B32B 2307/546; B32B 2605/08

## Description

### Technical field

The present invention relates to a multilayer composite with reduced bond line read through, a method for its production and the use of the multilayer composites with reduced bond line read through in automotive applications.

### Background of the invention

Multilayer composites, especially multilayer composites with surface layers comprising metal sheets and an intermediate adhesive layer are widely used in automotive applications. In the context of current political $CO_2$ reduction roadmaps, the trend towards light-weight solutions is obvious. One important pillar is weight reduction by thinning metal sheets. This is particularly effective in the automotive roof section, which only contributes to a minor amount to the overall stiffness for crash performance. E.g. reducing the thickness of a roof section with a 1 $m^2$ surface from 0.85 mm to 0.75 mm can save up to 1 kg of weight. However, evidently reducing the thickness has negative implications for characteristics such as the buckling stiffness, resistance towards hail, as well as noise, vibration, and harshness properties (NVH-properties) are also reduced. To overcome these drawbacks, different types of sandwich panels (DVD pads) were implemented and bonded directly underneath the roof in recent years. This approach proved to be, overall, successful and a moderate weight reduction was achieved.

One drawback of the state of the art multilayer composites is that due to the decreased thickness of the metal several adhesives, particularly upon exposure to thermal stresses, induce deformation of the metal surface, which is known as the bond line read through effect (BLRT effect). The effect is minimal, usually in the lower micrometers range, but is visible on the surface of the painted composite. Surfaces with a strong BLRT effect are perceived as of low quality, which is not acceptable for vehicle manufacturers.

To avoid a strong bond line read through effect in the art, it was necessary use adhesives which have a very low modulus. This however, is associated with the disadvantage that the bonded systems only had a limited stiffness. In order to achieve a satisfactory overall level of stiffness it was thus necessary to use thicker, heavier substrates, which contravenes the desired weight reduction.

CA 822 071 A discloses a formable metal laminate comprising an outer metal layer and a perforated metal base layer, having an open area ranging from about 5% to 95% of the base metal, the layers being bonded together with a polyurethane resin-based adhesive.

CA 962 573 A discloses a laminate comprising a metal layer and a second metal layer. Sandwiched between those layers are screens

embedded in a viscoelastic polyurethane adhesive material. Said screens are woven metal stress raising members. The laminate is

used for automotive applications.

US 6 602 611 B1 discloses multilayer composite plates, which comprise two outer metal panels as cover plate and base plate which are connected by a deformable web material which is located between them,

wherein the plates are joined to the web material by means of foamable adhesive which fills the cavities which remain in the composite, and wherein the web material comprises an expanded-metal grid, a wire grid or a web metal sheet.

US 2009/0056868 A1 discloses a method for avoiding BLRT effects in adhesively bonded polymeric panels in automobile assembly. The method involves using an adhesive comprising platelets of nanometer-scale thick filler particles, which is taught to cause reduction of the BLRT effect.

### Summary of the invention

It was an object of the present invention to overcome these disadvantages of the prior art. In particular, it was an object of the present invention to provide a multilayer composite, comprising two surface layers, preferably comprising a metal sheet, and an intermediate adhesive layer, preferably for use in automotive applications that could allow for an easier, more effective and/or cheaper weight reduction of the car body and, at the same time, would assure excellent mechanical properties, such as high stiffness by using an adhesives featuring higher modulus, which is not at the cost of a strong BLRT effect.

Surprisingly it was found that the above mentioned problems could be solved by a multilayer composite according to claim 1, in particular by a multilayer composite comprising two surface layers with an intermediate adhesive layer and a layer of a material with a discontinuous surface, wherein the layer of the material with a discontinuous surface is located between the surface of the adhesive and the surface of at least one of the surface layers, such that the adhesive bonding to the surface of said surface layer is through a multitude of small individual bonding areas or dots, characterized in that the adhesive has a G-modulus, determined according to DIN 54451, of more than 2 MPa, wherein the adhesive in the adhesive layer comprises a one component polyurethane adhesive, a two-component polyurethane adhesive, a silane terminated one component and/or a silane terminated two-component polyurethane adhesive, preferably a one-component polyurethane adhesive.

The multilayer composite of the present invention shows a satisfactory stiffness with a significant reduction of the composite weight vis-à-vis the state of the art. In addition, the multilayer composite according to the present invention allows for the use of adhesives with a high modulus and thin metal sheets as surface layers, while at the same time exhibiting a very low BLRT effect on the surface of the composite.

The present invention further relates to a method for preparing a multilayer composite according to the invention as well as to a multilayer composite produced by said method and the use of the multilayer composite in automotive applications, preferably in automotive roofs.

**Detailed description of the invention**

The term "bond line read through effect" (BLRT effect) as used herein refers to distortions of a substrate, like a metal sheet over a cured adhesive bond-line. These distortions are visible on the side of the top substrate, which is opposite the side to which the adhesive binds. BLRT can result from the thermal cure of an adhesive, which is often necessary to effect bonding and to produce a strong joint, but may also occur if a finished composite is subjected to thermal stress, e.g. when a vehicle roof is exposed to high intensity sunlight.

While the thermal cure cycle is intended to cure the adhesive, it also triggers the formation of minute surface distortions in the vicinity of the bond line known as bond line read through which has a negative impact on the visual appeal of the surface. Similar effects can be seen also with adhesives that are cured at room temperature and then are exposed to thermal stresses, for example when a vehicle is standing outside in hot climates for prolonged periods. Bond line read through deformations are thought to be the result of a stress applied from the adhesive bead to the painted substrate. The stress can be generated, at least in part, from differences in the thermal expansion coefficients between the substrate and the adhesive or by shrinkage of the adhesive during curing or thermal aging process. Significant BLRT often results in part rejection and the subsequent time and cost of rework.

A multilayer composite as used herein is a material comprising at least three layers made from two or more constituent materials with significantly different physical or chemical properties that, when combined, produce a material with characteristics different from the individual components. The individual components remain separate and distinct within the finished structure. The new material is advantageous for many reasons: common examples include materials which are stronger, lighter, or less expensive when compared to traditional materials. Composite materials are generally used for buildings and structures such as car, boat and aircraft bodies.

In the multilayer composite according to the present invention, the two surface layers form the outermost layers of the multilayer composite and contain an intermediate adhesive layer and a layer of a material with a discontinuous surface. The layer of the material with discontinuous surface is located between the surface of the adhesive and the surface of at least one of the surface layers.

A material with a "discontinuous surface" also referred to as "filter" as used herein refers to a preferably planar material, which has holes in its surface which, in case the material is applied between an adhesive and a substrate allow for the adhesive to contact the substrate via the holes. The arrangement of the holes is not decisive so that it is possible that the arrangement of the holes can be regular or irregular (e.g. random). Moreover, the holes in the discontinuous surface may all have the same size or may be of different sizes. The material with the discontinuous surface on the other hand must be constituted as one part. Thus, it does not cover individual dots, as such an arrangement would not ensure a discontinuous contact surface of the adhesive and the surface layer.

To ensure that the adhesive binding is not significantly affected, it is desirable that the holes account for at least 50 %, more preferably at least 60% and most preferably at least 70 % of the surface of the "material with a discontinuous surface". On the other hand, to provide an effect the holes should preferably not cover more than 98%, more preferably more than 95% and most preferably more than 90% of the surface of the "material with a discontinuous surface".

In a preferred embodiment the material with a discontinuous surface has a net-like geometry. A material with "net-like geometry" as used herein refers to a preferably planar fabric in which the material is fused, looped or knotted at intersections, resulting in a fabric with open spaces. The spaces may comprise rectangular holes, rhombus holes, circular holes and/or rectangular bars.

In the multilayer composite according to the invention, the material with the discontinuous surface is located on the interface between the adhesive layer and the surface layer. The multilayer composite according to the invention may comprise either one material with a discontinuous surface which is located on the interface between the adhesive layer and one of the surface layers or two materials with a discontinuous surface which are located on the interface between the adhesive layer and each of the surface layers. It is preferred that the multilayer composite according to the invention comprises one material with a discontinuous surface which is located on the interface between the adhesive layer and the surface layer, which forms the visible outside or the exterior of the final workpiece comprising the multilayer composite according to the invention. Preferably, this surface has a paint coating or varnish in its ultimate application (e.g. as a vehicle roof) on the side opposite the adhesive.

Without being bound by theory, it is thought that the material with a discontinuous surface allows for the adhesive to contact the surface layer in the portions thereof where it has holes, so that the adhesive can bond to the surface layer. On the other hand, the material with a discontinuous surface prevents the bonding of the adhesive in the area where it has no holes. Thus effectively, the adhesive bonding to the surface is through a multitude of small individual bonding areas or dots. This appears to confine surface distortions resulting for an interaction of the adhesive and the surface layer, e.g. when the structure is heated, to small portions of the surface layer, which translates into a reduced BLRT.

As is evident from the above, to ensure the BLRT reduction it is of importance that the material with the discontinuous surface is at the interface between the adhesive layer and the surface layer as it has to be ensured that the adhesive binds to the surface layer with a discontinuous pattern. If the binding is not with a discontinuous pattern, e.g. because the material with the discontinuous surface was partially of fully submerged into the adhesive, a reduction of the BLRT effect was not observed.

Accordingly, the material with a discontinuous surface is preferably planar as this more securely helps to prevent the material from submerging into the adhesive layer. If the surface is not substantially planar, the adhesive much more easily may migrate through the material with a discontinuous surface to thus form a uniform contact with the surface layer. As explained above, this is to be prevented.

The multilayer composite according to the invention comprises two surface layers which each may comprise a plastic plate or a plastic sheet including carbon fiber based materials, a metal plate or a metal sheet, wherein a metal plate or a metal sheet is especially preferred. The term plate or sheet generally refers to thin piece of the respective material, with a thickness of about 0.3 mm to about 1.5 mm, preferably of about 0.40 mm to about 0.95 mm, more preferably of about 0.50 mm to about 0.75 mm. The relatively thin metal plates or sheets lead to a preferred overall weight reduction of the multilayer composite. The type of metal is generally not restricted to any specific metal but may comprise any type of metal known by the skilled person for use to manufacture multilayer composites, such as aluminum, titan, iron, copper, tin, zinc as well as metal alloys, such as steel. Preferably, the multilayer composite according to the invention comprises two surface layers each of which preferably comprises an aluminum or steel plate or sheet.

The multilayer composite according to the invention comprises an intermediate adhesive layer. The adhesive comprises one-component polyurethane adhesives, two-component polyurethane adhesives, silane terminated one-component polyurethane adhesives, and/or silane terminated two-component polyurethane adhesives. Preferably the adhesive layer comprises a one-component polyurethane adhesive such as for example the one-component polyurethane adhesives available under the tradenames Sikaflex® MKV3i1, and SikaTack® OEM+ (all from SIKA), or Togocoll FK 910 (from Eftec).

The adhesive in the adhesive layer of the multilayer composite according to the present invention has a G-modulus, determined according to DIN 54451, of more than 2 MPa, preferably of more than 3 MPa, wherein the G-modulus is concerned with the deformation of a solid when it experiences a force parallel to one of its surfaces while its opposite face experiences an opposing force (such as friction). The G- modulus of an object is defined as the slope of its stress-strain curve in the elastic deformation region. A stiffer material will have a higher G- modulus. The G- modulus follows the formula:

$$G - modulus = \frac{shear - stress}{shear - strain}$$

wherein shear-stress is the force which acts parallel to one of the substrate's surfaces causing the deformation divided by the area to which the force is applied and shear-strain is the product of the transverse displacement and the area on which the force acts. The use of an adhesive with a higher G-modulus results in a stiffer and more stable composite.

The multilayer composite according to the invention comprises a material with a discontinuous surface as defined above. The type of material of the material with a discontinuous surface is not particularly limited, expect that, to achieve weight reduction, it should not be based on metal. Preferred materials include cellulose or fiber derived materials such as paper, which may be siliconized one or both sides, or plastic. Preferred plastics include polyethylene, polypropylene, polyester, and polyamide, wherein polypropylene is particularly preferred.

The material with a discontinuous surface as defined above comprises open spaces or holes. Preferably, those spaces comprise rectangular holes including square holes, rhombus holes, circular holes and/or rectangular bars horizontal or vertical to the bonding direction, wherein square and/or rhombus holes are particularly preferred. The material with a discontinuous surface used in the present invention may comprise one or more different types of holes in one material, however it is preferred that all holes in the material used to prepare a multilayer composite according to the present invention are from the same type. It is also possible that the materials has different sizes of the holes, which however, has no impact on the BLRT reduction, so that for ease of manufacture of the material it is preferred that the material has holes of the same size.

The holes in the material with a discontinuous surface preferably have a dimension of 2-5 mm to 2-5 mm. This means that the hole has the dimension of 2 to 5 mm in the x-direction and a size of 2 to 5 mm in the y-direction, wherein the x and y-axis lie within the same plane. Accordingly, when the holes in the material with a discontinuous surface are circular, their radii are between 1 and 2.5 mm.

The material with a discontinuous surface is further characterized by its weight per $m^2$, which can have in impact on the reduction of the BLRT effect in the multilayer composite according to the invention. Preferably, the material with a discontinuous surface has a weight such that, when positioned above the non-cured adhesive, it remains thereon without submerging into the adhesive. Accordingly the weight of the materials with a discontinuous surface has to be chosen in accordance with the properties of the adhesive, such as for example the viscosity of the non-cured adhesive.

The material with a discontinuous surface in the multilayer composite according to the present invention preferably has a weight of 100 to 400 $g/m^2$ more preferably of 150 to 350 $g/m^2$. When the weight is lower than 100 $g/m^2$ the material will be so thin that the reduction of the BLRT effect may not be sufficient. On the other hand, when the weight is higher than 350$g/m^2$ the material is more prone to submerge into the non-cured adhesive so that it is no longer located between the surface of the adhesive layer and the surface layer. This has the effect that the BLRT effect is not substantially reduced compared to an assembly which is devoid of the material with a discontinuous surface. Moreover, when the weight of the material with a discontinuous surface becomes too high, the effect of saving weight by using thinner substrates is contravened, which is undesirable.

The multilayer composite according to the present invention is preferably further characterized in that the intermediate adhesive layer has a thickness of 1 to 10 mm, more preferably 1 to 5 mm after curing of the adhesive. Thinner layers of adhesive are difficult to achieve due to the extremely high compression force needed, whereas thicker layers of adhesive are disadvantageous for the overall weight of the multilayer composite. A thicker bead would also result in a more space-demanding solution and this is notoriously undesired for interior solutions in the automotive business.

The present invention further relates to a method for preparing a multilayer composite according to the present invention, comprising the steps of:

a) providing a first surface layer,
b) applying an adhesive on one surface of the first surface layer,
c) applying a material with a discontinuous surface on the surface of the adhesive opposite to the first surface layer,
d) applying a second surface layer on the surface of the adhesive such that the material with a discontinuous surface is sandwiched between the adhesive and the second surface layer, and
e) curing the adhesive

All definitions related to the multilayer composite according to the invention do also apply to the method of its production.

Curing the adhesive can be accomplished by any means known to the person skilled in the art. The adhesive in the intermediate layer may for example be cured by chemical curing, by heating, preferably at a temperature of 50 to 200°C, by applying radiation, such as microwaves or UV light or by moisture. When a two-component adhesive is applied, the adhesive is usually cured by chemical reactions after mixing of the two components.

The material with a discontinuous surface is preferably applied onto the adhesive, as long as the adhesive is not cured, such that the material with a discontinuous surface does not submerge into the adhesive, but rather remains on the surface of the adhesive.

The material with a discontinuous surface, as indicated above, is applied on the surface of the adhesive such that the material with a discontinuous surface is sandwiched between the adhesive and the second surface layer. This can be achieved e.g. by placing the material with the discontinuous surface on the adhesive layer and by subsequently placing the second surface layer thereon. Alternatively, the material with the discontinuous surface can be pre-attached to the second surface layer, and the two layers can then be positioned on the adhesive in a single step. This embodiment has the advantage that the material with a discontinuous surface cannot sink into the adhesive, as it is pre-attached to the surface of the second surface layer and thus remains on the interface between the adhesive layer and the second surface layer. The pre-attachment can be achieved e.g. by means of clamps or other fastening means including adhesives. It is however prerequisite that the adhesive is not the same as the adhesive used in the adhesive layer. Preferred adhesives for the pre-attachment are pressure sensitive adhesives.

The present invention further relates to a multilayer composite obtainable by the method described above.

Moreover, the present invention relates to the use of the multilayer composite according to the present invention in the manufacture of buildings and structures such as car, boat and aircraft bodies. Preferably the multilayer composite according to the present invention is used for automotive applications, preferably in automotive roofs.

The following examples are presented to further illustrate and explain the present invention and should not be taken as limiting in any regard.

**Examples**

General procedure for the preparation of test multilayer composites

Multilayer composites according to the present invention were prepared as follows:
Tapes were applied on both side of the e-coated steel plate (dimensions 100 x 150 x 0.8 mm) as a boundary. A bead of the adhesive was then applied on the free surface of the e-coated steel plate. During application it should be observed that the adhesive is positioned sufficiently far from the border of the metal plate to avoid undesired side effect during the deflectometric measurement. Finally the tape with the adhesive in excess was removed.

To prepare the surface substrate, a paper tissue was positioned on a 20x15 cm glass plate. A painted metal plate (Rocholl GMBA dimension 150 x 120 x 0.3 mm), which was used for the BLRT measurement, was then deposited on the tissue with the paint facing the tissue. In the corner of the plate the required spacers were positioned. For the painted substrate it was ensured that it does not contain scratches or defect on the paint, as these disturb the measurement.

As the thickness of the adhesive layer can have an impact on the intensity of the BLRT effect, the height of the adhesive is indicated for each measurement and was keep constant for each measured series.

The painted plate was then bonded with the steel plate and the adhesive was cured for the required period of time. Before the BLRT measurement was done, an optic check of the surface of the painted metal plate was performed and apparent dust particles were removed.

In order to compare the multilayer composite according to the invention comprising a material with a discontinuous surface with a multilayer composite without the material with a discontinuous surface, two beads of adhesive were applied for some of the samples, which were spaced apart from each other on the e-coated steel plate. Subsequently, the material with the discontinuous surface was placed on one of the adhesive beads such that it remains on the surface of the adhesive and does not sink into the adhesive.

Example 1: Analysis the BLRT with different discontinuous materials

Table 1:

| Sample No. | Material with net-like geometry | | |
|---|---|---|---|
| | material | geometry and dimension of the holes | Weight [g/m$^2$] |
| 1 | Siliconized paper | Square 2x2 mm | 30 |
| 2 | Polypropylene | Rhombic 2x2 mm | 187 |
| 3 | Polypropylene | Rectangular 5x4 mm | 275 |

Samples 1, 2 and 3 were prepared in accordance with the description above and the BLRT was determined using a Deflectometer (Visuol Technologies) according to the following procedure.

The sample which is free of dust was positioned under the deflectometer, which was positioned on a flat, stable surface. Two glass elements were used to support the sample. The surface of the multilayer composite is then analyzed by the deflectometer.

Each of the samples was investigated twice, the first time after curing at room temperature for 7 or 10 days and a second time after heat treatment at 80°C for 2h in a ventilated oven.

The data was finally analyzed using the automated data workup as implemented in MountainsMap 7.0 (Digital Surf), essentially comprising the following steps:

- selecting the desired area and extracting it from the raw data,
- applying a Gaussian Filter (FALG), with a Nesting Index cut off of 2.5 mm,
- creating a three dimensional image and extracting the profile from the three dimensional image, perpendicular to the direction of the adhesive beads.

From the 3-dimensional image, the maximum deviation from the mean height (= 0) was determined and is indicated in both directions (i.e. above and below the plane).

In order to correctly evaluate the obtained data, images were compared with a reference value, which in each case was a composite which was devoid of the material with the discontinuous surface. The term "filter" used in the following Experimental data is equivalent to the "material with the discontinuous surface".

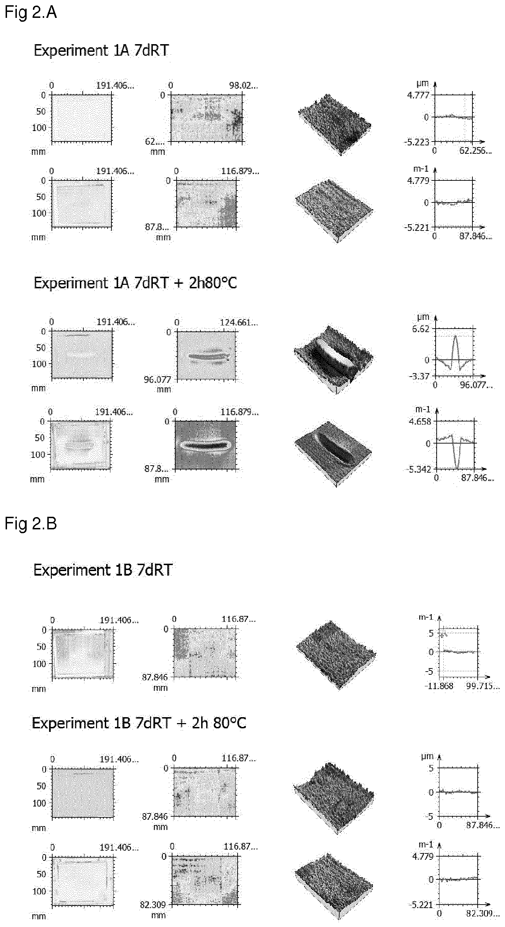

The BLRT of the samples 1A, 1B, 2 and 3 were determined and the results are shown in Table 2 and Figure 2.

Table 2:

| Experiment | Adhesive | Number of beads | Number of beads with filter | Filter | | | | | | Thickness adhesive bead [mm] | Deformation after 7 to 10 d @RT (altitude [µm]) | | Deformation after 10 d @RT + 2h @80°C (altitude [µm]) | |
| | | | | Material | Applied on | Hole geometry | Hole size [mm] | Height of the filter [mm] | Weight of the filter [g/m$^2$] | | With filter | Without filter | With filter | Without filter |
|---|---|---|---|---|---|---|---|---|---|---|---|---|---|---|
| 1A | SikaTack® OEM+ | 1 | 0 | --- | --- | --- | --- | --- | --- | 2 | --- | -0.5 to +0.6 | --- | -2 to + 5.4 |
| 1B | SikaTack® OEM+ | 1 | 1 | Perforated Silicon Paper | Metal layer | Circular | 3 (diameter) | 0.04 | 30 | 2 | -0.5 to +0.8 | --- | -0.5 to +0.8 | --- |
| 2 | SikaTack® OEM+ | 2 | 1 | Perforated Silicon Paper | Adhesive bead | Circular | 3 (diameter) | 0.04 | 30 | 2 | -0.4 to +0.6 | -0.4 to +0.6 | -0.2 to + 0.4 | -2 to +6 |
| 3 | SikaTack® OEM+ | 2 | 1 | Plastic | Adhesive bead | Rombic | 2x2 | 0.8 | 187 | 2 | -0.5 to +0.6 | -0.5 to + 0.6 | -0.2 to +0.6 | -1.7 To +4.2 |
| 4 | SikaTack® OEM+ | 2 | 1 | Plastic | Adhesive bead | Rectangular | 5x4 | 1.3 | 240 | 2 | -0.5 to +0.5 | -0.5 to +0.5 | 0.0 to +0.5 | -1.8 to +4.2 |

EP 3 600 870 B2

Generally, the Experimental data shows that the strength of the BLRT effect, measured by the maximum deviation is strongly temperature-dependent. While samples that were cured and / or aged solely at room temperature do generally not show a strong BLRT the BLRT is significantly higher in samples that were additionally incubated for 2 h at 80°C. Thermal aging of an adhesive simulates well the situation of a vehicle that is standing or operating in hot climates.

All investigated multilayer composites comprise two metal plates and an adhesive layer of 2 mm thickness. The BLRT investigation results of the sample 1A without the siliconized paper shows a strong BLRT effect in the heat treated sample that has a maximum deviation of -2 to + 5.4 $\mu$m.

This strong BLRT was significantly decreased to -0.5 to + 0.8 $\mu$m when a material with a discontinuous surface according to the invention in form of a perforated silicon paper was applied (sample 1B).

Similarly, in sample 2, which is a composite comprising 2 beads of adhesive, one with and one without the material with a discontinuous surface in form of a perforated silicon paper, the BLRT effect could be decreased from -2 to +6 $\mu$m to -0.2 to +0.4 $\mu$m in the portion, where the material with a discontinuous according to the invention was applied.

A comparison between samples 1B and 2 shows that the BLRT effect can be reduced by the material with a discontinuous surface according to the invention with a similar efficiency when the material with a discontinuous surface is either attached to the upper substrate or applied onto the adhesive.

In sample 3 comprising a rhombic plastic net with hole dimensions of 2x2 mm, the BLRT effect could be reduced from -1.7 to +4.2 $\mu$m to -0.2 to + 0.6 $\mu$m.

Similarly, In sample 4 comprising a square plastic net with hole dimensions of 5x5 mm, the BLRT effect could be reduced from -1.8 to +4.2 $\mu$m to -0.0 to + 0.5 $\mu$m.

Figure 2 shows the quantification of the BLRT effect of the composites of table 2 as bar diagrams. The bars extending to the right represent the deviation in the positive direction, and the bars extending in the left direction represent the deviation in the negative direction. The two bars for samples 2, 3 and 4 each represent a comparison of the maximum deviation for the sample with a material with a discontinuous surface (with filter) and without a material with a discontinuous surface (without filter). Sample 1A only shows the maximum deviation of the sample without a material with a discontinuous surface (without filter) and 1B only shows the maximum deviation of the sample with a material with a discontinuous surface (with filter).

The direct comparison clearly shows that a material with a discontinuous surface according to the invention minimizes the BLRT effect, especially in the sample that was aged for 2 h at 80°C.

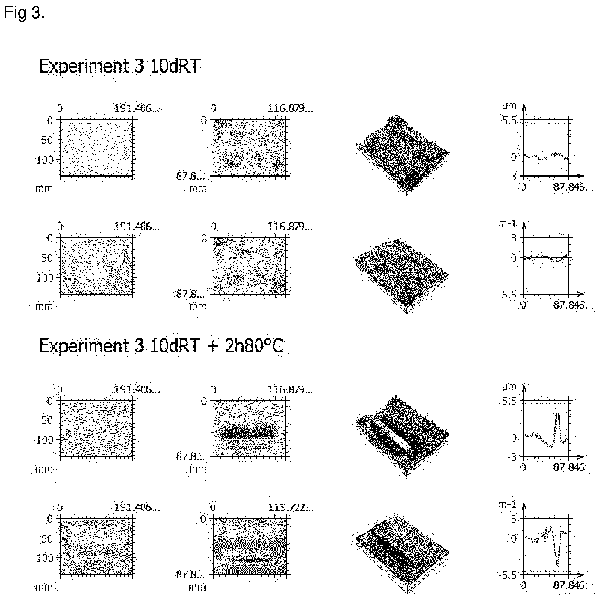

Figure 3 shows the appearance of the adhesive bead after disassembly of composite No. 4 and the removal of the net. The adhesive bead was cut using a metal wire. It is clearly visible, that the adhesive was separated into small portions by the net, thus resulting in a non-continuous interface between the surface of the adhesive and the metal plate.

Example 2: Analysis of stiffness

To analyze the stiffness of a multilayer composite according to the invention a three point bending test was carried out on the basis of ISO 178 with the following parameters:

- 3-point bending test with a supporting span of 190mm
- Supporting and loading rigs with a radius of 5mm
- Preload 1 N
- Testing speed 10mm/min
- Specimen size 9cm wide and 20cm long
- Determination of flexural deformation in mm at a flexural load of 20 and 40 N.
- The flexural stiffness (Load in N/deformation in mm) is divided by the width of the specimen (in mm).

Three point bending tests were performed with multilayer composites prepared comprising a perforated silicon coated paper layer, a perforated paper, a polypropylene net positioned at the interface between a metal layer and the adhesive beads.

Table 3:

| Filter | | | | |
|---|---|---|---|---|
| Material | Hole geometry | Hole size [mm] | Heights of filter [mm] | Weight of filter [g/m$^2$] |
| Perforated paper | square | 2x2 | 0.04 | 30 |
| Perforated silicon paper | square | 2x2 | 0.04 | 40 |
| Polypropylene | rectangular | 5x4 | 1.3 | 240 |

Sikaflex®-250 MKV3i1 was used as adhesive and the adhesive was pressed to a thickness of 2mm. For the three point bending test, a DVD pad featuring a PU rigid foam was applied as a second surface layer, instead of a second metal layer.

The test strips were prepared with a 9x20 cm metal layer. The adhesive beads were applied with an automatic application device on the DVD foam pad (GA Bohemia cz 0511880/00, 9x16 cm), the filter was applied on top of the adhesive beads and then the system was bonded to the metal layer.

The adhesive was cured for 10 days at 23°C and 50% r.h.

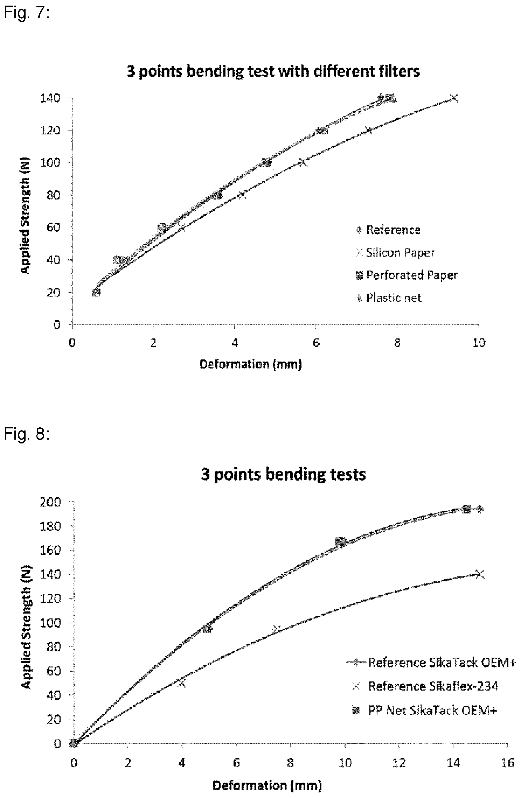

The stiffness measurement results of each tested sample are shown in in table 4 and Figure 7.

Table 4:

| Applied strength [N] | Bending deformation [mm] | | | |
| --- | --- | --- | --- | --- |
| | Reference | Silicon Paper | Perforated Paper | PP net |
| 20 | 0.6 | 0.6 | 0.6 | 0.6 |
| 40 | 1.3 | 1.3 | 1.1 | 1.1 |
| 60 | 2.3 | 2.7 | 2.2 | 2.2 |
| 80 | 3.6 | 4.2 | 3.6 | 3.5 |
| 100 | 4.8 | 5.7 | 4.8 | 4.7 |
| 120 | 6.1 | 7.3 | 6.2 | 6.2 |
| 140 | 7.6 | 9.4 | 7.8 | 7.9 |

Surprisingly the introduction of a perforated silicon coated paper, perforated paper or plastic net only resulted in a modest reduction of the overall stiffness of the system, despite the fact that the contact surface of the adhesive and metal layer was reduced.

The stiffening effect of adhesives featuring different mechanical properties was also tested and the obtained results are reported in Table 5 and Figure 8. For this series of experiments the same DVD pads was used (GA Bohemia cz 0511880/00, 9x16 cm) and SikaTack® OEM+ (high modulus) was compared to Sikaflex®-234 (low modulus). These tests clearly show that, using an adhesive featuring a higher modulus, a better stiffening effect can be obtained. Tests performed using SikaTack® OEM+ with a filter (polypropylene net, 5x4mm net) also in this case gave comparable results to the tests performed without filter.

Table 5:

| Applied strength (N) | Bending deformation in (mm) | | |
| --- | --- | --- | --- |
| | Reference SikaTack® OEM+ | Reference Sikaflex®-234 | Net SikaTack® OEM+ |
| 0 | 0 | - | 0 |
| 50 | - | 4 | - |
| 95 | 5 | 7.5 | 4.9 |
| 140 | - | 15 | - |
| 167 | 10 | - | 9.8 |
| 187 | - | - | - |
| 194 | 15 | - | 14.5 |

## Claims

1.    A multilayer composite comprising two surface layers with an intermediate adhesive layer and a layer of a material with a discontinuous surface, wherein the layer of the material with a discontinuous surface is located between the surface of the adhesive and the surface of at least one of the surface layers, such that the adhesive bonding to the surface of said surface layer is through a multitude of small individual bonding areas or dots, **characterized in that** the adhesive has a G-modulus, determined according to DIN 54451, of more than 2 MPa, wherein the adhesive in the adhesive layer comprises a one component polyurethane adhesive, a two-component polyurethane adhesive, a silane terminated one component and/or a silane terminated two-component polyurethane adhesive, preferably a one-component polyurethane adhesive.

2. The multilayer composite according to claim 1, wherein the material with a discontinuous surface has a net-like geometry.

3. The multilayer composite according to claim 1 or 2, wherein each of two surface layers comprises a metal plate, preferably an aluminum or steel plate, preferably with a thickness of about 0.3 mm to about 1.5 mm, preferably of 0.40 mm to about 0.95 mm, most preferably from about 0.5 to about 0.75 mm.

4. The multilayer composite according to any of the preceding claims, wherein the adhesive in the adhesive layer has a G-modulus, determined according to DIN 54451, of 3 MPa or more.

5. The multilayer composite according to claim 2 or a thereon dependent claim, wherein the material with a net-like geometry is a material selected from the group consisting of polyethylene, polypropylene, polyester, polyamide, cellulose derived materials and/or fiber derived materials, preferably polypropylene.

6. The multilayer composite according to any of the preceding claims, wherein the material with a discontinuous surface has a geometry comprising rectangular holes, rhombic holes, circular holes and/or rectangular bars horizontal or vertical to the bonding direction.

7. The multilayer composite according to any of the preceding claims, wherein the holes in the material with a discontinuous surface have a dimension of 2 to 5 mm in the x-direction and a size of 2 to 5 mm in the y-direction, wherein the x and y-axis lie within the same plane.

8. The multilayer composite according to any of the preceding claims, wherein the material with a discontinuous surface has a weight of 100 to 400 $g/m^2$, preferably of 150 to 350 $g/m^2$.

9. The multilayer composite according to any of the preceding claims, wherein the adhesive layer has a thickness of 1 to 10 mm, preferably 1 to 5 mm after curing of the adhesive.

10. A method for preparing a multilayer composite according to any of the preceding claims 1 to 9 comprising the steps of

     a) providing a first surface layer,
     b) applying an adhesive on one surface of the first surface layer,
     c) applying a material with a discontinuous surface on the surface of the adhesive opposite to the first surface layer,
     d) applying a second surface layer on the surface of the adhesive such that the material with a discontinuous surface is sandwiched between the adhesive and the second surface layer, and
     e) curing the adhesive

11. The method according to claim 10, wherein the material with a discontinuous surface is pre-attached to the surface of the second surface layer before applying the second two surface layer on the surface of the adhesive.

12. The multilayer composite obtainable by the method according to any claims 10 or 11.

13. Use of the multilayer composite according to any of claims 1 to 9 and 12 for automotive applications, preferably in automotive roofs.

**Patentansprüche**

1. Mehrschichtiger Verbundwerkstoff, umfassend zwei Oberflächenschichten mit einer dazwischenliegenden Klebeschicht und eine Schicht aus einem Material mit einer unterbrochenen Oberfläche, wobei sich die Schicht aus dem Material mit einer unterbrochenen Oberfläche zwischen der Oberfläche des Klebstoffs und der Oberfläche von mindestens einer der Oberflächenschichten befindet, sodass die Klebebindung an die Oberfläche der Oberflächenschicht durch eine Vielzahl von kleinen einzelnen Bindungsflächen oder -punkten erfolgt, **dadurch gekennzeichnet,**

**dass** der Klebstoff einen G-Modul, ermittelt gemäß DIN 54451, von mehr als 2 MPa aufweist, wobei der Klebstoff in der Klebeschicht einen Einkomponentenklebstoff auf Basis von Polyurethan, einen Zweikomponentenklebstoff auf Basis von Polyurethan, einen Einkomponenten- und/oder Zweikomponentenklebstoff auf Basis von silanterminiertem Polyurethan, vorzugsweise einen Einkomponentenklebstoff auf Basis von Polyurethan, umfasst.

2. Mehrschichtiger Verbundwerkstoff nach Anspruch 1, wobei das Material mit einer unterbrochenen Oberfläche eine netzartige Geometrie aufweist.

3. Mehrschichtiger Verbundwerkstoff nach Anspruch 1 oder 2, wobei jede der zwei Oberflächenschichten eine Metallplatte umfasst, vorzugsweise eine Aluminium- oder Stahlplatte, vorzugsweise mit einer Dicke von etwa 0,3 mm bis etwa 1,5 mm, vorzugsweise von 0,40 mm bis etwa 0,95 mm, besonders bevorzugt von etwa 0,5 bis etwa 0, 75 mm.

4. Mehrschichtiger Verbundwerkstoff nach einem der vorstehenden Ansprüche, wobei der Klebstoff in der Klebeschicht einen G-Modul, ermittelt gemäß DIN 54451, von 3 MPa oder mehr aufweist.

5. Mehrschichtiger Verbundwerkstoff nach Anspruch 2 oder einem davon abhängigen Anspruch, wobei das Material mit einer netzartigen Geometrie ein Material ist, das aus der Gruppe bestehend aus Polyethylen, Polypropylen, Polyester, Polyamid, aus Cellulose gewonnenen Materialien und/oder aus Fasern gewonnenen Materialien, vorzugsweise Polypropylen, ausgewählt ist.

6. Mehrschichtiger Verbundwerkstoff nach einem der vorstehenden Ansprüche, wobei das Material mit einer unterbrochenen Oberfläche eine Geometrie aufweist, die rechteckige Löcher, rautenförmige Löcher, kreisförmige Löcher und/oder rechteckige Streifen horizontal oder vertikal zu der Bindungsrichtung umfasst.

7. Mehrschichtiger Verbundwerkstoff nach einem der vorstehenden Ansprüche, wobei die Löcher in dem Material mit einer unterbrochenen Oberfläche eine Abmessung von 2 bis 5 mm in der x-Richtung und eine Größe von 2 bis 5 mm in der y-Richtung aufweisen, wobei die x- und die y-Achse in derselben Ebene liegen.

8. Mehrschichtiger Verbundwerkstoff nach einem der vorstehenden Ansprüche, wobei das Material mit einer unterbrochenen Oberfläche ein Gewicht von 100 bis 400 g/m$^2$, vorzugsweise von 150 bis 350 g/m$^2$, aufweist.

9. Mehrschichtiger Verbundwerkstoff nach einem der vorstehenden Ansprüche, wobei die Klebeschicht nach dem Härten des Klebstoffs eine Dicke von 1 bis 10 mm, vorzugsweise 1 bis 5 mm, aufweist.

10. Verfahren zum Herstellen eines mehrschichtigen Verbundwerkstoffs nach einem der vorstehenden Ansprüche 1 bis 9, umfassend die folgenden Schritte:

    a) Bereitstellen einer ersten Oberflächenschicht,
    b) Aufbringen eines Klebstoffs auf eine Oberfläche der ersten Oberflächenschicht,
    c) Aufbringen eines Materials mit einer unterbrochenen Oberfläche auf die Oberfläche des Klebstoffs gegenüber der ersten Oberflächenschicht,
    d) Aufbringen einer zweiten Oberflächenschicht auf die Oberfläche des Klebstoffs, sodass das Material mit einer unterbrochenen Oberfläche sandwichartig zwischen dem Klebstoff und der zweiten Oberflächenschicht eingeschlossen ist, und
    e) Härten des Klebstoffs.

11. Verfahren nach Anspruch 10, wobei das Material mit einer unterbrochenen Oberfläche vorab an der Oberfläche der zweiten Oberflächenschicht befestigt wird, bevor die zweite Oberflächenschicht auf die Oberfläche des Klebstoffs aufgebracht wird.

12. Mehrschichtiger Verbundwerkstoff, erhältlich durch das Verfahren nach einem der Ansprüche 10 oder 11.

13. Verwendung des mehrschichtigen Verbundwerkstoffs nach einem der Ansprüche 1 bis 9 und 12 für Automobilanwendungen, vorzugsweise in Automobildächern.

**Revendications**

1.  Composite multicouche comprenant deux couches de surface avec une couche d'adhésif intermédiaire et une couche d'un matériau avec une surface discontinue, la couche du matériau avec une surface discontinue étant située entre la surface de l'adhésif et la surface d'au moins une des couches de surface, de telle sorte que l'assemblage par adhésif à la surface de ladite couche de surface se fait par une multitude de zones ou points d'assemblage individuels de petite taille, **caractérisé en ce que** l'adhésif a un module G, déterminé conformément à la méthode DIN 54451, de plus de 2 MPa, dans lequel l'adhésif dans la couche d'adhésif comprend un adhésif de polyuréthane monocomposant, un adhésif de polyuréthane bicomposant, un adhésif de polyuréthane monocomposant à terminaisons silane et/ou bicomposant à terminaisons silane, de préférence un adhésif de polyuréthane monocomposant.

2.  Composite multicouche selon la revendication 1, dans lequel le matériau avec une surface discontinue a une géométrie en forme de filet.

3.  Composite multicouche selon la revendication 1 ou 2, dans lequel chacune des deux couches de surface comprend une plaque métallique, de préférence une plaque d'aluminium ou d'acier, de préférence avec une épaisseur d'environ 0,3 mm à environ 1,5 mm, de préférence de 0,40 mm à environ 0,95 mm, idéalement d'environ 0,5 à environ 0,75 mm.

4.  Composite multicouche selon l'une quelconque des revendications précédentes, dans lequel l'adhésif dans la couche d'adhésif a un module G, déterminé conformément à la méthode DIN 54451, de 3 MPa ou plus.

5.  Composite multicouche selon la revendication 2 ou une revendication dépendante de celle-ci, dans lequel le matériau avec une géométrie en forme de filet est un matériau choisi dans le groupe constitué par le polyéthylène, le polypropylène, le polyester, le polyamide, les matériaux dérivés de la cellulose et/ou les matériaux dérivés de fibres, de préférence le polypropylène.

6.  Composite multicouche selon l'une quelconque des revendications précédentes, dans lequel le matériau avec une surface discontinue a une géométrie comprenant des trous rectangulaires, des trous en losange, des trous circulaires et/ou des barres rectangulaires, horizontaux ou verticaux par rapport à la direction d'assemblage.

7.  Composite multicouche selon l'une quelconque des revendications précédentes, dans lequel les trous dans le matériau avec une surface discontinue ont une dimension de 2 à 5 mm dans la direction x et une taille de 2 à 5 mm dans la direction y, les axes x et y se situant dans le même plan.

8.  Composite multicouche selon l'une quelconque des revendications précédentes, dans lequel le matériau avec une surface discontinue a un poids de 100 à 400 g/m$^2$, de préférence de 150 à 350 g/m$^2$.

9.  Composite multicouche selon l'une quelconque des revendications précédentes, dans lequel la couche d'adhésif a une épaisseur de 1 à 10 mm, de préférence 1 à 5 mm après durcissement de l'adhésif.

10. Procédé de préparation d'un composite multicouche selon l'une quelconque des revendications 1 à 9 précédentes comprenant les étapes suivantes :

    a) obtention d'une première couche de surface,
    b) application d'un adhésif sur une surface de la première couche de surface,
    c) application d'un matériau avec une surface discontinue sur la surface de l'adhésif à l'opposé de la première couche de surface,
    d) application d'une deuxième couche de surface sur la surface de l'adhésif de telle sorte que le matériau avec une surface discontinue soit intercalé entre l'adhésif et la deuxième couche de surface, et
    e) durcissement de l'adhésif.

11. Procédé selon la revendication 10, dans lequel le matériau avec une surface discontinue est préalablement attaché à la surface de la deuxième couche de surface avant l'application de la deuxième couche de surface sur la surface de l'adhésif.

12. Composite multicouche pouvant être obtenu par le procédé selon l'une quelconque des revendications 10 et 11.

13. Utilisation du composite multicouche selon l'une quelconque des revendications 1 à 9 et 12 pour des applications automobiles, de préférence dans des toits d'automobiles.

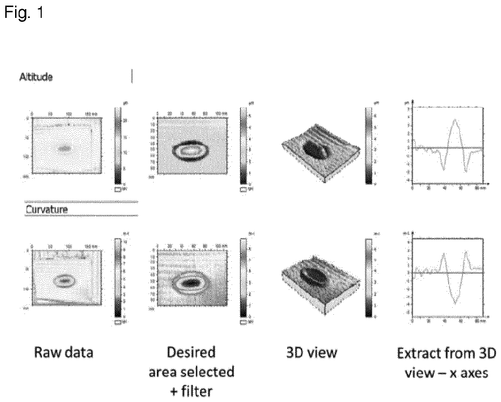

Fig. 1

| Raw data | Desired area selected + filter | 3D view | Extract from 3D view – x axes |

## Fig 2.A

### Experiment 1A 7dRT

### Experiment 1A 7dRT + 2h80°C

## Fig 2.B

### Experiment 1B 7dRT

### Experiment 1B 7dRT + 2h 80°C

Fig 3.

## Experiment 3 10dRT

## Experiment 3 10dRT + 2h80°C

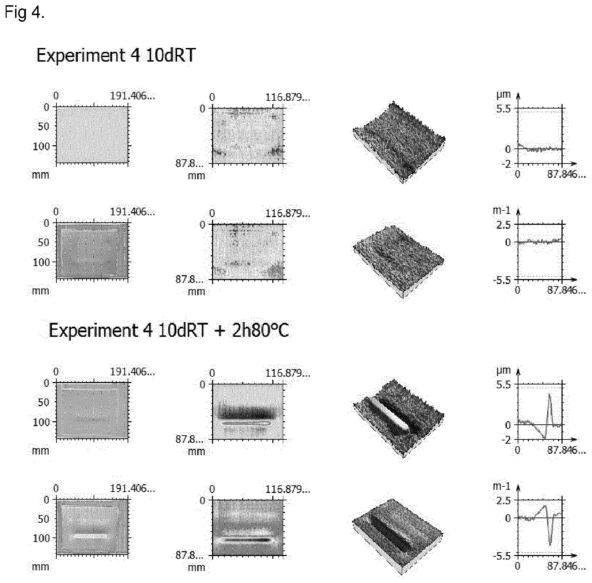

Fig 4.

Experiment 4 10dRT

Experiment 4 10dRT + 2h80°C

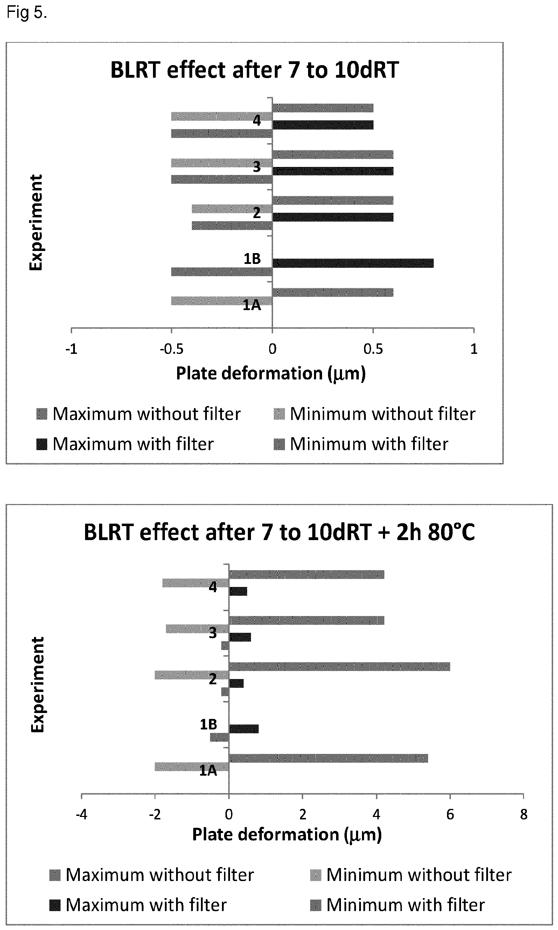

Fig 5.

**BLRT effect after 7 to 10dRT**

Experiment

Plate deformation (μm)

■ Maximum without filter  ▧ Minimum without filter
■ Maximum with filter  ▧ Minimum with filter

**BLRT effect after 7 to 10dRT + 2h 80°C**

Experiment

Plate deformation (μm)

▧ Maximum without filter  ▧ Minimum without filter
■ Maximum with filter  ▧ Minimum with filter

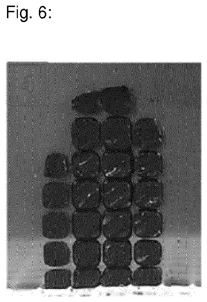

Fig. 6:

Fig. 7:

**3 points bending test with different filters**

Fig. 8:

**3 points bending tests**

## REFERENCES CITED IN THE DESCRIPTION

**Patent documents cited in the description**

- CA 822071 A
- CA 962573 A
- US 660261181 B
- US 20090056868 A1